Europäisches Patentamt

European Patent Office

Office européen des brevets

(19)

(11) Numéro de publication: **0 136 385**
**B1**

(12) **FASCICULE DE BREVET EUROPEEN**

(45) Date de publication du fascicule du brevet: **02.09.87**

(51) Int. Cl.⁴: **G 01 P 13/00**

(21) Numéro de dépôt: **83401938.2**

(22) Date de dépôt: **04.10.83**

(54) **Dispositif destiné à détecter une différence de pression d'un fluide.**

(43) Date de publication de la demande:
**10.04.85 Bulletin 85/15**

(45) Mention de la délivrance du brevet:
**02.09.87 Bulletin 87/36**

(84) Etats contractants désignés:
**AT BE CH DE FR GB IT LI LU NL SE**

(56) Documents cités:
**DE-A-2 936 579**
**DE-B-1 252 299**
**FR-A-1 588 006**
**US-A-3 763 883**

(73) Titulaire: **COMPAGNIE DES GAZ DE PETROLE PRIMAGAZ**
**64, avenue Hoche**
**F-75008 Paris (FR)**

(72) Inventeur: **Bourgeon, Michel**
**30, rue Montesquieu**
**F-38100 Grenoble (FR)**
Inventeur: **Mounier, Marc**
**F-13250 Pont de Rhaud par Cornillon (FR)**

(74) Mandataire: **Bourgognon, Jean-Marie et al**
**Cabinet Flechner 22, Avenue de Friedland**
**F-75008 Paris (FR)**

Courier Press, Leamington Spa, England.

EP 0 136 385 B1

## Description

L'invention se rapporte aux dispositifs destinés à détecter une différence de pression d'un fluide entre deux tronçons d'un même conduit du type défini au préambule de la revendication principale et s'applique d'une manière générale au contrôle des circuits de fluide.

Un dispositif de détection du débit d'un fluide est décrit au brevet français FR—A—1 588 006. Un premier aimant défile verticalement devant une matière magnétique (ou inversement) et, en une position donnée, l'attire en la faisant pivoter. Il se crée ainsi des problèmes de frottement et de réglage et, surtout, l'aimant ne fonctionne pas dans les meilleures conditions, parce qu'il est disposé latéralement par rapport à la matière magnétique. On connait aussi des dispositifs à aimant annulaire, mais ils sont très coûteux à fabriquer et eux aussi peu efficaces, quand on en rapporte le rendement à la masse aimantée mise en oeuvre (DE—B—1 252 299).

Le dispositif suivant l'invention est très sûr et d'une simplicité et fiabilité très grandes par rapport aux dispositifs antérieurs connus. Surtout, il permet d'obtenir les rendements énergétiques les meilleurs d'une manière reproductible sur une longue durée.

Il est remarquable notamment par les caractéristiques qui sont définies dans la partie caractérisante de la revendication principale.

Quand la pression du fluide dans le conduit est suffisamment plus élevée dans un tronçon que dans l'autre, les forces dues à la pression du fluide dans le premier cylindre y poussent le premier aimant permanent dans la seconde position. Le second aimant est alors soumis à l'effet du champ magnétique du premier aimant et est déplacé en étant guidé dans son cylindre. L'effet est optimum puisque les axes magnétiques sont alignés. En dégageant le prolongement axial du premier aimant afin de pouvoir y loger le second aimant, on a pu obtenir, d'autant mieux que les aimants sont montés libres et sans frottement, des poussées de 100 à 200 grammes (0,01 à 0,02N) avec des aimants en forme de simples barreaux de 6 à 8 mm de diamètre, alors qu'auparavant il faillait donner aux aimants des dimensions bien plus importantes pour obtenir des poussées de cet ordre.

D'autres caractéristiques de l'invention resortent des sous-revendications.

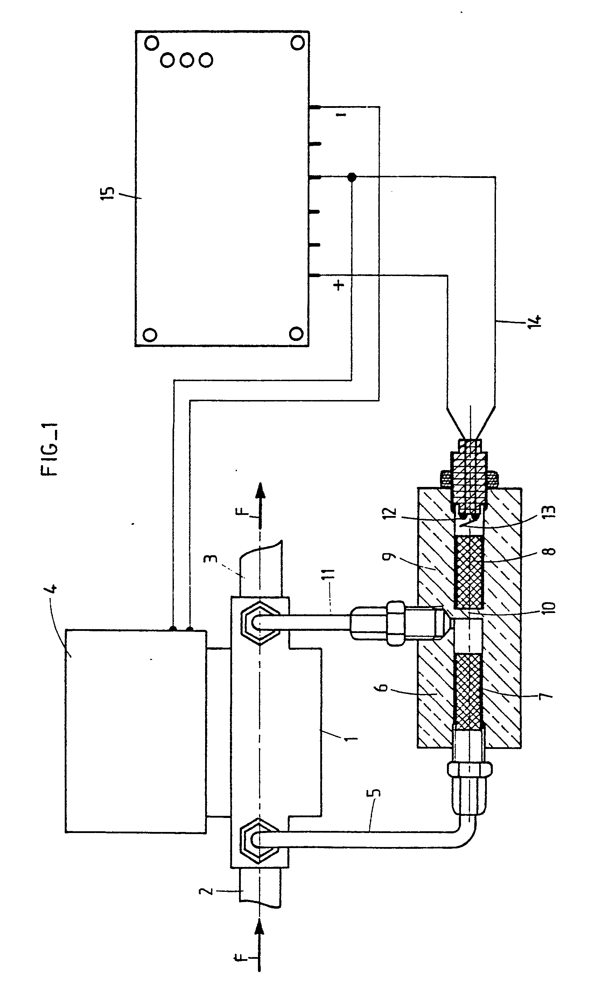

La figure 1 est un schéma d'un dispositif suivant l'invention associé à une électrovanne pour le remplissage d'un réservoir à hydrocarbure, tel que du gaz de pétrole liquéfié.

Le conduit 1 de remplissage d'un réservoir, non représenté, à partir d'une source de carburant, non représentée, suivant un écoulement allant dans le sens des flèches F, comprend un tronçon 2 en amont et un tronçon 3 en aval d'une section dont le débit est commandé par une électrovanne 4.

Une tubulure 5 met le tronçon 2 en communication avec l'une des extrémités d'un cylindre 6 en une matière amagnétique et imperméable au fluide. Un aimant permanent 7 peut coulisser librement, à la manière d'un piston, dans le cylindre 6, en passant d'une position proche de l'extrémité par laquelle la tubulure 5 débouche dans le cylindre 6 à une position à l'autre extrémité du cylindre 6. Dans cette dernière position, l'aimant permanent 7, dont le pôle nord est éloigné de la tubulure 5, se rapproche d'un aimant permanent 8 logé lui aussi dans un alésage d'un cylindre 9, avec possibilité de coulisser librement à la manière d'un piston avec un jeu assez grand. Les deux alésages alignés des cylindres 6 et 9 sont séparés l'un de l'autre, d'une manière étanche au fluide, par une cloison 10 amagnétique. En l'espèce, les cylindres 6 et 9 et la cloison 10 viennent de moulage d'une seule pièce, ce qui est favorable à l'étanchéité, notamment à celle du cylindre 6 qui contient un produit dangereux. Le pôle nord de l'aimant permanent 8 est en regard du pôle nord de l'aimant 7. Les axes magnétiques des deux aimants 7, 8 sont alignés.

Une tubulure 11, issue du tronçon 3, débouche latéralement dans l'alésage du cylindre 6 à l'extrémité proche de la cloison 10.

L'alésage du cylindre 9 est obturé par un interrupteur 12 à lame 13 élastique de contact qui tend à repousser l'aimant 8 vers la cloison 10. Cet interrupteur ferme et ouvre le circuit électrique 14 de commande de l'électrovanne 4, par l'intermédiaire d'un contrôleur de remplissage 15.

Lorsque la différence de pression du fluide entre les tronçons 2 et 3 est inférieure à un seuil donné, l'aimant 7, qui n'est pas soumis du côté de son pôle sud à des forces de pression, occupe dans le cylindre 6 la position éloignée de la cloison 10. L'aimant 8 n'est pas repoussé par l'aimant 7. Il est repoussé par la lame 13 et vient au contact de la cloison 10. On commence à remplir le réservoir. La pression augmente dans le tronçon 2 et donc dans la tubulure 5. Sous l'action des forces de pression du fluide, l'aimant 7 coulisse vers la cloison 10. Il repousse l'aimant 8 qui ferme l'interrupteur 12. Le circuit 14 ouvre l'électrovanne 4 par l'intermédiaire du contrôleur de remplissage 15. Lorsque le remplissage est interrompu, la différence de pression régnant dans les conduits 2 et 3 diminué, puis s'inverse. L'aimant 7 est repoussé loin de la cloison 10 par les forces de pression du fluide. L'aimant 8 est repoussé par la lame 13 qui ouvre le circuit 14.

## Revendications

1. Dispositif destiné à détecter une différence de pression d'un fluide entre deux tronçons (2, 3) en amont et en aval d'un conduit, qui comprend un premier cylindre (6) fermé, en une matière amagnétique et imperméable au fluide, muni à chaque extrémité respectivement d'une tubulure (5, 11) de raccordement destinée à être raccordée aux tronçons (2, 3), un premier aimant permanent (7) monté coulissant librement dans le cylindre (6) d'une première position à une seconde position sous l'effet de la poussée du fluide, un second aimant permanent (8) coulissant librement dans un cylindre (9) de même axe que le premier (6) en étant déplacé d'une première position à une seconde position sous l'effet de la variation du champ magnétique créée par le passage du premier aimant (7) de la première position à la seconde position, le second cylindre (9) étant séparé du premier cylindre (6) par une cloison amagnétique (10) étanche, et un moyen pour détecter la venue du second aimant (8) à la seconde position, caractérisé en ce que le second cylindre (9) est en dehors du premier cylindre (6) et dans le prolongement de celui-ci, les axes magnétiques passant respectivement par les pôles des deux aimants (7 et 8) étant alignés, le second aimant (8) n'est pas sensible au champ magnétique du premier aimant (7) quand celui-ci est en la première position et il est prévu en élément élastique (13) pour ramener le second aimant (8) en sa première position au contact de la cloison (10) au retour du premier aimant (7) à la première position.

2. Dispositif suivant la revendication 1, caractérisé en ce que l'un des pôles du second aimant (8) est en regard du pôle de même polarité du premier aimant (7).

3. Dispositif suivant la revendication 1 ou 2, caractérisé en ce que l'élément élastique (13) fait partie du moyen pour détecter la venue du second aimant (8) à la seconde position.

4. Dispositif suivant la revendication 1, 2 ou 3, caractérisé en ce que les deux cylindres (6, 9) sont d'une seule pièce.

**Patentansprüche**

1. Vorrichtung zum Feststellen einer Druckdifferenz in einem strömenden Medium, welche zwischen den Drucken in einem stromaufseitigen bzw. einem stromabseitigen Rohrleitungsabschnitt (2, 3) einer Leitung (1) besteht, mit einem ersten geschlossenen Zylinder (6), der aus einem nicht magnetischen und für das Strömungsmittel undurchlässigen Material gefertigt ist und an seinen beiden Enden jeweils eine Verbindungsleitung (5, 11) aufweist, die jeweils mit einem der Rohrleitungsabschnitte (2, 3) verbindbar ist, mit einem ersten Permanentmagneten (7), der im ersten Zylinder (6) frei gleiten kann und unter der Schubkraft des Strömungsmittels aus einer ersten Stellung in eine zweite Stellung bewegbar ist, mit einem zweiten Permanentmagneten (8), der in einem zum ersten Zylinder (6) koaxialen zweiten Zylinder (9) frei gleiten kann, wobei er durch diejenige Änderung des Magnetfeldes, die durch das Verlagern des ersten Permanentmagneten (7) aus dessen erster Stellung in dessen zweite Stellung erhalten wird, aus einer ersten Stellung in eine zweite Stellung bewegbar ist, mi einer nicht magnetischen dichten Trennwand (10), welche den zweiten Zylinder (9) vom ersten Zylinder (6) trennt, und mit einem Fühler (12, 13), der anspricht, wenn der zweite Permanentmagnet (8) seine zweite Stellung erreicht, dadurch gekennzeichnet, daß der zweite Zylinder (9) außerhalb des ersten Zylinders (6) in dessen Verlängerung angeordnet ist, wobei die magnetischen Achsen miteinander fluchten, die jeweils durch die Pole der beiden Permanentmagnete (7, 8) vorgegeben sind, und wobei der zweite Permanentmagnet (8) auf das Magnetfeld des ersten Permanentmagneten (7) nur dann anspricht, wenn sich letzterer in der ersten Stellung befindet, und daß elastische Mittel (13) vorgesehen sind, welche den zweiten Permanentmagneten (8) dann, wenn der erste Permanentmagnet (7) in seine erste Stellung zurückkehrt, in dessen eigene erste Stellung zurückbringen, in welcher er die Trennwand (10) berührt.

2. Vorrichtung nach Anspruch 1, dadurch gekennzeichnet, daß der eine der Pole des zweiten Permanentmagneten (8) demjenigen Pol des ersten Permanentmagneten (7) zugewandt ist, welcher die gleiche Polarität aufweist.

3. Vorrichtung nach Anspruch 1 oder 2, dadurch gekennzeichnet, daß die elastischen Mittel (13) einen Teil des Fühlers (12, 13) darstellen, welcher anspricht, wenn der zweite Permanentmagnet (8) seine zweite Stellung erreicht.

4. Vorrichtung nach einem der Ansprüche 1 bis 3, dadurch gekennzeicht, daß die beiden Zylinder (6, 9) ein einstückiges Teil bilden.

**Claims**

1. Device intended for detecting a pressure difference in a fluid between an upstream section (2) and a downstream section (3) of a conduit, comprising a first closed cylinder (6) made of a non-magnetic material impermeable to the fluid and equipped at each end respectively with a connecting pipe (5, 11) intended to be connected to the sections (2, 3), a first permanent magnet (7) mounted so as to slide freely in the cylinder (6) from a first position to a second position under the effect of the thrust of the fluid, a second permanent magnet (8) sliding freely in a cylinder (9) of the same axis as the first (6), being shifted from a first position to a second position under the effect of the variation in the magnetic field caused when the first magnet (7) changes from the first position to the second position, the second cylinder (9) being separated from the first cylinder (6) by means of a leak-proof non-magnetic partition (10), and a means of detecting the arrival of the second magnet (8) in the second position, characterized in that the second cylinder (9) is outside the first cylinder (6) and forms an extension of the latter, the magnetic axes passing respectively through the poles of the two magnets (7 and 8) being aligned with one another, the second magnet (8) is not sensitive to the magnetic field of the first magnet (7) when the latter is in the first position, and there is an elastic element (13) for bringing the second magnet (8) back into its first position in contact with the partition (10) at the return of the first magnet (7) to the first position.

2. Device according to Claim 1, characterized in that one of the poles of the second magnet (8) is located opposite the pole of the same polarity of the first magnet (7).

3. Device according to Claim 1 or 2, characterized in that the elastic element (13) forms part of the means of detecting the arrival of the second magnet (8) in the second position.

4. Device according to Claim 1, 2 or 3, characterized in that the two cylinders (6, 9) are in one piece.

FIG_1

0 136 385